# EUROPÄISCHE PATENTANMELDUNG

(11) **EP 3 381 967 A1**
(43) Veröffentlichungstag der Anmeldung: **03.10.2018**
(21) Anmeldenummer: 17000505.2
(22) Anmeldetag: 28.03.2017
(51) Int. Cl.: C08G 73/02

(54) **HOMOGENE POLY(ALKYLEN)GUANIDINE UND VERFAHREN ZU DEREN HERSTELLUNG**

(71) Anmelder: Flechsig, Thomas, 5626 Hermetschwil-Staffeln (CH)
(72) Erfinder: Flechsig, Thomas, 6313 Edlibach (CH); Flechsig, Frank, 5610 Wohlen (CH)
(74) Vertreter: v. Bezold & Partner Patentanwälte - PartG mbB

(57) **Zusammenfassung**

Die Erfindung betrifft ein Verfahren zur Herstellung von Poly(alkylen)guanidinen, umfassend mindestens die folgenden Schritte:
a) Bereitstellen eines Alkylendiamins der Formel NH₂-(CH₂)ₘ-NH₂ mit m = 4-12, insbesondere 6-10, in einem Reaktionsgefäß und Erwärmen des Alkylendiamins auf eine Temperatur gleich oder oberhalb der Schmelztemperatur des jeweiligen Alkylendiamins, typischerweise auf eine Temperatur in einem Bereich von 25 °C bis 115 °C, vorzugsweise von 55 °C bis 110 °C, wodurch eine Schmelze des Alkylendiamins entsteht;
b) portionsweises Zugeben eines Guanidinium-Salzes, insbesondere Guanidinium-HCl, und Umsetzen mit dem Alkylendiamin, bis die Bildung von Alkylen(guanidin)-Monomeren abgeschlossen ist;
c) Umsetzen der in Schritt b) gebildeten Monomere bei mindestens der minimalen Temperatur, bei der die Polymerisation zum gewünschten Poly(alkylen)guanidin beginnt,
bis die Bildung des Poly(alkylen)guanidins abgeschlossen ist;
wobei die Schritte a) und b) zur Bildung von Alkylen(guanidin)-Monomeren bei einer Temperatur unterhalb der minimalen Polymerisationstemperatur erfolgen und alle Verfahrensschritte unter Rühren durchgeführt werden.

Ein weiterer Aspekt der Erfindung betrifft die mit dem oben beschriebenen Verfahren erhältlichen homogenen Poly(alkylen)guanidine, welche einen Gehalt von mindestens 85 Gew.-%, insbesondere mindestens 90 % oder 97 %, eines gewünschten linearen Poly(alkylen)guanidins mit 3-14, vorzugsweise 4-10, Alkylen-Monomereinheiten im Molekül als Hauptprodukt und einen Gehalt an Nebenprodukten, insbesondere verzweigten Isomeren dieses Poly(alkylen)guanidins, von höchstens 15 %, 10 %, 5 % oder 3 % aufweisen.

## Beschreibung

### Hintergrund der Erfindung

Verschiedene Verfahren zur Herstellung von Poly(alkylen)guanidinen sind grundsätzlich bekannt und beinhalten typischerweise die direkte Umsetzung eines Alkylendiamins mit Guanidinium-Hydrochlorid zum Polymer bei relativ hohen Temperaturen oberhalb der minimalen Polymerisationstemperatur für das gewünschte Poly(alkylenguanidin), z.B. etwa bei der Schmelztemperatur des Guanidinium-Hydrochlorids von 180°C. Solche Verfahren werden beispielsweise in DE 102009060249 A1, WO 1999054291 A1, und DE 102009060249 B4 beschrieben.

Nachteilig bei diesen herkömmlichen Verfahren ist beispielsweise, dass aufgrund der hohen Reaktionstemperatur und der hohen Viskosität von Guanidinium-Hydrochlorid bzw. der Reaktionsmischung bei dieser Temperatur einerseits eine sehr starke Ammoniakbildung während der Kondensationsreaktionen erfolgt und andererseits die Ausgasung nicht ausreichend schnell und kontrolliert erfolgen kann.

Außerdem liegen bei diesen hohen Temperaturen praktisch gleichzeitig Mischungen von Alkylen-Monomeren und verschiedenen Polymermolekülen mit kleinem Polymerisationsgrad als Edukte vor, was eine große Auswahl an Reaktionsmöglichkeiten und ein breites Spektrum an potentiellen finalen Reaktionsprodukten ergibt.

Diese und andere negative Effekte führen dazu, dass bei den herkömmlichen Verfahren nicht nur lineare Poly(alkylen)guanidine mit gewünschter Kettenlänge sondern auch ein hoher Anteil an kürzeren und längeren Ketten und insbesondere auch ein hoher Anteil (typischerweise mindestens 20 %) an verzweigten Poly(alkylenguanidin)-Isomeren gebildet wird.

Heterogene Produkte, insbesondere mit einem hohem Isomerenanteil, sind jedoch für viele Anwendungen unerwünscht, da wesentliche Eigenschaften von Poly(alkylen)guanidinen wie biologische Abbaubarkeit, Aktivität etc. von strukturellen Parametern wie Molekülgröße, Isomerenanteil, Verzweigungsgrad etc., abhängen und daher mit einem solchen heterogenen Produkt nicht zuverlässig vorherbestimmbar sind.

Vor diesem Hintergrund besteht die Hauptaufgabe der vorliegenden Erfindung in der Bereitstellung eines neuen Verfahrens zur Herstellung definierter Poly(alkylen)guanidine, mit dem die geschilderten Nachteile des Standes der Technik weitgehend oder vollständig vermieden werden, und in der Bereitstellung der entsprechenden homogenen, insbesondere isomerenarmen Produkte.

Diese Aufgabe wird erfindungsgemäß mit der Bereitstellung des Verfahrens nach Anspruch 1 und der damit erhältlichen Poly(alkylen)guanidin-Produkte nach Anspruch 12 gelöst. Speziellere Aspekte und bevorzugte Ausführungsformen der Erfindung sind Gegenstand der weiteren Ansprüche.

### Beschreibung der Erfindung

Das erfindungsgemäße Verfahren zur Herstellung von Poly(alkylen)guanidinen nach Anspruch 1 umfasst mindestens die folgenden Schritte:
a) Bereitstellen eines Alkylendiamins der Formel NH₂-(CH₂)ₘ-NH₂ mit m = eine ganze Zahl von 4-12 in einem Reaktionsgefäß und Erwärmen des Alkylendiamins auf eine Temperatur gleich oder oberhalb der Schmelztemperatur des jeweiligen Alkylendiamins, typischerweise auf eine Temperatur in einem Bereich von 25°C bis 115°C, vorzugsweise von 55 °C bis 110 °C, wodurch eine Schmelze des Alkylendiamins entsteht;
b) portionsweises Zugeben eines Guanidinium-Salzes (in fester, insbesondere partikulärer Form) und Umsetzen mit dem Alkylendiamin, bis die Bildung von Alkylen(guanidin)-Monomeren abgeschlossen ist;
c) Umsetzen der in Schritt b) gebildeten Monomere bei mindestens der minimalen Temperatur, bei der die Polymerisation zum gewünschten Poly(alkylen)guanidin beginnt, bis die Bildung des Poly(alkylen)guanidins abgeschlossen ist;
wobei die Schritte a) und b) zur Bildung von Alkylen(guanidin)-Monomeren bei einer Temperatur unterhalb der minimalen Polymerisationstemperatur erfolgen und alle Verfahrensschritte unter Rühren durchgeführt werden.

Das verwendete Alkylendiamin der Formel NH₂-(CH₂)ₘ-NH₂, mit m = eine ganze Zahl von 4-12, insbesondere 6-10, umfasst insbesondere die Vertreter mit einer geraden Anzahl von Kohlenstoffen wie Tetramethylendiamin, Hexamethylendiamin, Oktamethylendiamin, Dekamethylendiamin und Dodekamethylendiamin, ist jedoch nicht darauf beschränkt.

Gewünschtenfalls könnte auch eine Mischung von Diaminen mit einer Formel wie oben definiert eingesetzt werden.

Das verwendete Guanidinium-Salz kann prinzipiell jedes Salz einer organischen oder, bevorzugter, anorganischen Säure sein. Vorzugsweise handelt es sich um ein Guanidinium-Phosphat oder Guanidium-Halogenid, besonders bevorzugt um Guanidinium-Chlorid, welches auch (insbesondere im Handel) als Guanidinium-Hydrochlorid bezeichnet wird.

Die Monomerbildung in Schritt b) kann grundsätzlich bei einer Temperatur im Bereich von 20 °C bis 115°C, spezieller bei einer Temperatur von 25°C bis 110 °C, durchgeführt werden. Typischerweise liegt die Temperatur im Bereich von 41°C bis 110°C, bevorzugter im Bereich von 65 °C bis 95 °C. Die optimale Reaktionstemperatur hängt u.a. vom jeweiligen Alkylendiamin ab.

Für Tetramethylendiamin wird Schritt b) vorzugsweise bei einer Temperatur im Bereich von 20 °C bis 70 °C, durchgeführt; für Hexamethylendiamin vorzugsweise bei einer Temperatur im Bereich von 60 °C bis 80 °C; für Oktamethylendiamin vorzugsweise bei einer Temperatur im Bereich von 70 °C bis 90 °C; und für Dekamethylendiamin vorzugsweise bei einer Temperatur im Bereich von 75 °C bis 90 °C.

Die Monomerbildung in Schritt b) wird typischerweise für einen Zeitraum von 15 min bis 20 h oder 25 h, vorzugsweise von 30 min. bis 6 h, durchgeführt bis die Bildung von Alkylen(guanidin)-Monomeren abgeschlossen ist.

Der Abschluss der Monomerbildung in Schritt b) kann durch Beendigung der Schaumbildung aufgrund von NH₃-Freisetzung festgestellt werden und gegebenenfalls wird für einen vorbestimmten Zeitraum ein Unterdruck im Reaktionsgefäß erzeugt, um die Schaumbildung zu fördern.

In einer Ausführungsform des erfindungsgemäßen Verfahrens wird für einen Zeitraum im Bereich von 10 bis 240 min, typischerweise von 15 bis 90 min, ein Druck im Bereich von 2 mbar bis 4000 mbar, vorzugsweise von 10 mbar bis 1000 mbar, in Schritt b) im Reaktionsgefäß vorgelegt.

Gegebenenfalls kann in Schritt b) nicht umgesetztes Alkylendiamin vor Schritt c) abdestilliert werden. Dies geschieht vorzugsweise ebenfalls bei Unterdruck.

Die Polymerisation oder genauer die Polykondensation in Schritt c) wird typischerweise für einen Zeitraum von 30 min bis 25 h, vorzugsweise von 30 min bis 6 h oder 30 min bis 10 h, durchgeführt.

Eine speziellere Ausführungsform des erfindungsgemäßen Verfahrens umfasst mindestens die folgenden Schritte:
a) Bereitstellen eines Alkylendiamins der Formel NH₂-(CH₂)ₘ-NH₂ mit m = 4-12, insbesondere 6-10, in einem Reaktionsgefäß, vorzugsweise einem Druckreaktor, und Erwärmen des Alkylendiamins auf eine Temperatur gleich oder oberhalb der Schmelztemperatur des jeweiligen Alkylendiamins, typischerweise auf eine Temperatur in einem Bereich von 41 °C bis 90 °C, vorzugsweise von 55 °C bis 80 °C, wodurch eine Schmelze des Alkylendiamins entsteht;
b) portionsweises Zugeben eines Guanidinium-Salzes, z.B. von Guanidinium-Hydrochlorid, in fester Form und Umsetzen mit dem Alkylendiamin unter Rühren bei einer Temperatur im Bereich von 41 °C bis 110°C, vorzugsweise von 65 °C bis 95 °C, für einen Zeitraum von 15 min bis 25 h, vorzugsweise von 30 min bis 6 h, bis die Bildung von Alkylen(guanidin)-Monomeren abgeschlossen ist;
c1) Erwärmen der in Schritt b) gebildeten Monomere unter Rühren auf die minimale Temperatur, bei der die Polymerisation zum gewünschten Poly(alkylen)guanidin beginnt;
c2) Halten der Reaktionsmischung bei dieser Temperatur für einen vorbestimmten Zeitraum, typischerweise im Bereich von 5 min bis 6 h, vorzugsweise im Bereich von 10 bis 90 min; c3) Langsames Erhöhen der Reaktionstemperatur, typischerweise in Schritten von etwa 5 °C, und nach jedem Schritt Halten der Reaktionsmischung bei der jeweiligen erhöhten Temperatur für einen vorbestimmten Zeitraum, typischerweise im Bereich von 5 min bis 6 h, vorzugsweise im Bereich von 10 bis 90 min;
c4) Halten der Reaktionsmischung bei der vorbestimmten Maximaltemperatur für einen vorbestimmten Zeitraum, typischerweise im Bereich von 110 bis 180 min, vorzugsweise 120 bis 160 min;
c5) Reduzieren der Temperatur der Reaktionsmischung auf einen vorbestimmten Wert unterhalb der Maximaltemperatur aber oberhalb der Minimaltemperatur zur Polymerisation und Halten der Reaktionsmischung bei dieser Temperatur für einem vorbestimmten Zeitraum;
c6) Abkühlen der Reaktionsmischung auf eine Temperatur unterhalb der minimalen Polymerisationstemperatur zur Beendigung der Polymerisation, wodurch das gewünschte homogene Poly(alkyen)guanidin direkt erhalten wird;
wobei die Schritte a) und b) bei einer Temperatur unterhalb der minimalen Polymerisationstemperatur erfolgen und alle Verfahrensschritte a) bis c) unter Rühren durchgeführt werden.

Im erfindungsgemäßen Verfahren liegt das Molverhältnis von Alkylendiamin zu Guanidinium-Salz typischerweise im Bereich von 1,2:1 und beträgt vorzugsweise etwa 1:1.

Ein weiterer Aspekt der vorliegenden Erfindung betrifft die mit dem erfindungsgemäßen Verfahren erhältlichen homogenen Produkte.

Diese Poly(alkylen)ganidine weisen einen Gehalt von mindestens 85 Gew.-%, typischerweise mindestens 90 %, insbesondere mindestens 95 % oder 97 %, eines gewünschten linearen Poly(alkylen)guanidins mit 3-14, vorzugsweise 4-10 oder 6-8, Alkylen-Monomereinheiten im Molekül als Hauptprodukt und einen Gehalt an Nebenprodukten, insbesondere verzweigten Isomeren dieses Poly(alkylen)guanidins, von höchstens 15 % (in dieser Anmeldung in Hinblick auf den Isomerenanteil auch als "isomerenreduziertes" Produkt bezeichnet), 10 % ("isomerenarmes" Produkt), 5 % oder 3 % ("isomerenreines" Produkt) auf.

Im Gegensatz dazu weisen Poly(alkylen) guanidine, die mit den üblichen Verfahrens des Standes der Technik erhalten werden, in der Regel eine wesentlich höheren Gehalt an Isomeren auf (typischerweise über 20 %, in einzelnen Fällen sogar bis 70% Isomere).

In einer spezielleren Ausführungsform des erfindungsgemäßen Verfahrens werden Poly(alkylen)guanidine hergestellt, welches ein Molekulargewichts-Mittel im Bereich von 500 bis 15.000, insbesondere von 500 bis 5.000. Dalton, aufweisen, wobei höchstens 15 %, vorzugsweise höchstens 10 %, und besonders bevorzugt höchstens 3 % der Polymermoleküle ein Molekulargewicht außerhalb des jeweiligen Molekulargewichts-Mittels aufweisen.

### BEISPIEL 1

### Herstellung und Charakterisierung eines Poly(hexamethylen)guanidins

Die Edukte Hexamethylendiamin (HMDA) und Guanidinium-Hydrochlorid (GHC) wurden in einem Molverhältnis von 1:1 abgewogen.

HMDA wurde in einen Reaktor gefüllt und pulverförmiges oder kristallines GHC in die Vorlage eingebracht. Der Reaktor wurde auf eine Innentemperatur IT von 60°C erhitzt und der Rührer bei vollständiger Schmelze des HMDA eingeschaltet. Bei Erreichen dieser IT-Temperatur wurde die Temperaturregelung auf 65°C eingestellt, mit laufendem Rührer.

Bei konstanter Temperatur wurde GHC aus der Vorlage zudosiert. Die Ammoniakbildung setzte sofort ein. Schäumung und Temperatur wurden kontrolliert und gegebenenfalls die Zudosierung variiert und/oder Kühlung eingesetzt. Die Reaktortemperatur sollte den Bereich von 60 °C bis 80 °C nicht verlassen und vorzugsweise im Bereich von 60-70 °C liegen.

Nach Beendigung der GHC-Zudosierung reduzierte sich die Schaumbildung deutlich und die Temperatur pegelte sich auf 65 °C ein. Nach Erhöhung der Rührerdrehzahl und Anlegung eines Unterdrucks von 10 mbar bis 950 mbar, vorzugsweise 200 mbar bis 600 mbar, setzte geringe Schäumung wieder ein. Sobald der Druck konstant war und keine Schäumung oder Bläschenbildung sichtbar war, wurde die Temperatur auf IT 80 °C erhöht und die Rührerdrehzahl auf Maximum erhöht. Nach 20 min wurde der Unterdruck aufgehoben und die Rührerdrehzahl wieder verringert. Die Monomerbildung war jetzt abgeschlossen.

Es wurde eine Probe des Reaktorinhalts entnommen und der HMDA-Gehalt überprüft. Bei einem zu hohen HDMA-Restgehalt kann der Druck des Reaktors auf 10 mbar abgesenkt und das HMDA bis 60 °C abdestilliert werden.

Zur Polymerisation wurde auf eine Temperatur IT von 120°C mit Rührer in Betrieb aufgeheizt und 1 h lang bei konstanter Temperatur gehalten. Dann erfolgte eine langsame Erhöhung der Temperatur in Schritten von 5 °C bis 140 °C, wobei die Temperatur 30 min lang bei jedem Schritt gehalten wurde. Bei 140 °C wurde die Reaktion 2 h lang unter kräftigem Rühren gehalten. Es folgte eine weitere Temperaturerhöhung auf 150°C in Schritten von 5 °C. Die Temperatur wurde nach dem ersten Schritt für 1 h gehalten, dann weitere 2 h bei 150° C gehalten und die Rührerdrehzahl erhöht. Dann wurde die Temperatur auf 120 °C verringert und dort für 1 weitere Stunde gehalten.

Zur Beendigung der Polymerisation wurde auf eine IT von unter 95°C bei maximalem Rühren abgekühlt.

Das Produkt wurde mittels LC-MS und Stickstoffbestimmung charakterisiert.

Der theoretische Stickstoffanteil ("N soll") für das "ideale" (lineare) Polymer mit einem vorgegebenen Molekulargewichtsmittel und Polymerisationsgrad sowie für entsprechende verzweigte Isomere lässt sich anhand der jeweiligen Strukturformeln berechnen und mit dem tatsächlichen Stickstoffanteil des erhaltenen Polymers (N ist) vergleichen. Der theoretische Stickstoffanteil der Isomeren ist immer höher und daher stellt die Höhe des Stickstoffüberschusses (bezogen auf N soll) ein Maß für den jeweiligen Isomerenanteil dar.

Die folgenden Tabellen zeigen charakteristische Produktparameter unterschiedlicher Proben im Vergleich.

Die als Labor Test 1 und Labor Test 2 bezeichneten Proben wurden mit dem erfindungsgemäßen Verfahren erhalten, die anderen Proben mit verschiedenen herkömmlichen Verfahren. Die wichtigsten Verfahrensparameter sind in Tabelle 1 mit angegeben.

**Tabelle 1**

| Bestimmung des mittleren Polymerisationsgrads mit LC-MS, MALDI-TOF, GC | | | | | | |
|---|---|---|---|---|---|---|
| | **Verfahren** | **Temperatur** | **Temperatur** | **Temperatur** | **Zeit** | **Polymer** |
| **Probe** | **Edukte Reaktion Aggregatzustand** | **Schmelze** | **Monomer** | **Max Temp** | **Gesamt Stunden** | **Min/Max/Mittel** |
| | | | | | | |
| **Labor Test 1** | HMDA Flüssig / GHC fest | 55 | 70 | 150 | 6 | n4/n8/n6 |
| **Labor Test 2** | HMDA Flüssig / GHC fest | 55 | 65 | 145 | 8 | n3/n8/n5 |
| | | | | | | |
| **China Pulver 1000** | HMDA Flüssig / GHC flüssig | 180 | 180 | 210 | 7 | n4/n11/n6 |
| **China Kristall 1000** | HMDA Flüssig / GHC flüssig | 180 | 140 | 190 | 6 | n4/n10/n6 |
| | | | | | | |
| **Labor Test 36/182** | HMDA Flüssig / GHC flüssig | 180 | 130 | 190 | 5 | n27/n199/n72 |
| **Labor Test 36/184** | HMDA Flüssig / GHC flüssig | 180 | 130 | 230 | 5 | n32/n240/n82 |
| **Labor Test 36/192** | HMDA Flüssig / GHC flüssig | 180 | 130 | 190 | 3 | n16/n160/n54 |

**Tabelle 2**

| Vergleich des theoretischen Stickstoffanteils (N soll) für das "ideale" (lineare) Polymer mit dem angegebenen Molekulargewichtsmittel und Polymerisationsgrad mit dem tatsächlichen Stickstoffanteil des erhaltenen Polymers (N ist), wie gemessen mittels DumaTherm (DUMATHERM® Stickstoff-Schnellbestimmung nach DUMAS von Hersteller Gerhardt) mit 1 g Polymer | | | | |
|---|---|---|---|---|
| **Probe** | **Edukte Reaktion Aggregatzustand** | **N soll** | **N ist** | **Polymer Mw D** |
| | | | | |
| **Labor Test 1** | HMDA Flüssig / GHC fest | 245,72 | 281,3 | 1.083,30 |
| **Labor Test 2** | HMDA Flüssig / GHC fest | 247,53 | 265,8 | 905,60 |
| | | | | |
| **China Pulver 1000** | HMDA Flüssig / GHC flüssig | 245,72 | 378,2 | 1.083,30 |
| **China Kristall 1000** | HMDA Flüssig / GHC flüssig | 245,72 | 344,6 | 1.083,30 |
| | | | | |
| **Labor Test 36/182** | HMDA Flüssig / GHC flüssig | 237,30 | 316,2 | 12.811,44 |
| **Labor Test 36/184** | HMDA Flüssig / GHC flüssig | 237,21 | 321,8 | 14.588,44 |
| **Labor Test 36/192** | HMDA Flüssig / GHC flüssig | 237,56 | 324,6 | 9.612,84 |

**Tabelle 3**

| Ableitung des jeweiligen Anteils an Isomeren und (linearem) Polymer anhand des gemessenen Stickstoffüberschusses in Abhängigkeit vom Polymerisationsgrad | | | | |
|---|---|---|---|---|
| **Probe** | **Edukte Reaktion Aggregatzustand** | **Polymer %** | **Isomer %** | **Polymer Mw D** |
| | | | | |
| **Labor Test 1** | HMDA Flüssig / GHC fest | 85,52% | 14,48% | 1.083,30 |
| **Labor Test 2** | HMDA Flüssig / GHC fest | 92,62% | 7,38% | 905,60 |
| | | | | |
| **China Pulver 1000** | HMDA Flüssig GHC flüssig | 46,09% | 53,91% | 1.083,30 |
| **China Kristall 1000** | HMDA Flüssig / GHC flüssig | 59,76% | 40,24% | 1.083,30 |
| | | | | |
| **Labor Test 36/182** | HMDA Flüssig / GHC flüssig | 66,75% | 33,25% | 12.811,44 |
| **Labor Test 36/184** | HMDA Flüssig / GHC flüssig | 64,34% | 35,66% | 14.588,44 |
| **Labor Test 36/192** | HMDA Flüssig / GHC flüssig | 63,36% | 36,64% | 9,612,84 |

Es ist ersichtlich, dass die mit dem erfindungsgemäßen Verfahren erhaltenen Proben einen deutlich geringeren Isomerenanteil als die herkömmlichen Proben aufweisen.

## Patentansprüche

1. Verfahren zur Herstellung von Poly(alkylen)guanidinen, umfassend mindestens die folgenden Schritte:
a) Bereitstellen eines Alkylendiamins der Formel NH₂-(CH₂)ₘ-NH₂ mit m = 4-12, insbesondere 6-10, in einem Reaktionsgefäß und Erwärmen des Alkylendiamins auf eine Temperatur gleich oder oberhalb der Schmelztemperatur des jeweiligen Alkylendiamins, typischerweise auf eine Temperatur in einem Bereich von 25 °C bis 115 °C, vorzugsweise von 55 °C bis 110 °C, wodurch eine Schmelze des Alkylendiamins entsteht;
b) portionsweises Zugeben eines Guanidinium-Salzes und Umsetzen mit dem Alkylendiamin, bis die Bildung von Alkylen(guanidin)-Monomeren abgeschlossen ist;
c) Umsetzen der in Schritt b) gebildeten Monomere bei mindestens der minimalen Temperatur, bei der die Polymerisation zum gewünschten Poly(alkylen)guanidin beginnt,
bis die Bildung des Poly(alkylen)guanidins abgeschlossen ist;
wobei die Schritte a) und b) zur Bildung von Alkylen(guanidin)-Monomeren bei einer Temperatur unterhalb der minimalen Polymerisationstemperatur erfolgen und alle Verfahrensschritte unter Rühren durchgeführt werden.

2. Verfahren nach Anspruch 1, wobei Schritt b) bei einer Temperatur im Bereich von 20 °C bis 115°C, vorzugsweise von 25°C bis 110 °C, für einen Zeitraum von 15 min bis 20 h, vorzugsweise von 30 min bis 6 h, durchgeführt wird und/oder wobei Schritt c) für einen Zeitraum von 30 min bis 25 h, vorzugsweise von 30 min bis 10 h, durchgeführt wird.

3. Verfahren nach Anspruch 1 oder 2, umfassend mindestens die folgenden Schritte:
a) Bereitstellen eines Alkylendiamins der Formel NH₂-(CH₂)ₘ-NH₂ mit m = 4-12, insbesondere 6-10, in einem Reaktionsgefäß, vorzugsweise einem Druckreaktor, und Erwärmen des Alkylendiamins auf eine Temperatur gleich oder oberhalb der Schmelztemperatur des jeweiligen Alkylendiamins, typischerweise auf eine Temperatur in einem Bereich von 41 °C bis 90 °C, vorzugsweise von 55 °C bis 80 °C, wodurch eine Schmelze des Alkylendiamins entsteht;
b) portionsweises Zugeben eines Guanidinium-Salzes, z.B. von Guanidinium-Hydrochlorid, und Umsetzen mit dem Alkylendiamin unter Rühren bei einer Temperatur im Bereich von 41 °C bis 110 °C, vorzugsweise von 65 °C bis 95 °C, für einen Zeitraum von 15 min bis 25 h, vorzugsweise von 30 min bis 6 h, bis die Bildung von Alkylen(guanidin)-Monomeren abgeschlossen ist;
c1) Erwärmen der in Schritt b) gebildeten Monomere unter Rühren auf die minimale Temperatur, bei der die Polymerisation zum gewünschten Poly(alkylen)guanidin beginnt;
c2) Halten der Reaktionsmischung bei dieser Temperatur für einen vorbestimmten Zeitraum, typischerweise im Bereich von 5 min bis 6 h, vorzugsweise im Bereich von 10 bis 90 min;
c3) Langsames Erhöhen der Reaktionstemperatur, typischerweise in Schritten von etwa 5°C, und nach jedem Schritt Halten der Reaktionsmischung bei der jeweiligen erhöhten Temperatur für einen vorbestimmten Zeitraum, typischerweise im Bereich von 5 min bis 6 h, vorzugsweise im Bereich von 10 bis 90 min;
c4) Halten der Reaktionsmischung bei der vorbestimmten Maximaltemperatur für einen vorbestimmten Zeitraum, typischerweise im Bereich von 110 bis 180 min, vorzugsweise 120 bis 160 min;
c5) Reduzieren der Temperatur der Reaktionsmischung auf einen vorbestimmten Wert unterhalb der Maximaltemperatur aber oberhalb der Minimaltemperatur zur Polymerisation und Halten der Reaktionsmischung bei dieser Temperatur für einem vorbestimmten Zeitraum;
c6) Abkühlen der Reaktionsmischung auf eine Temperatur unterhalb der minimalen Polymerisationstemperatur zur Beendigung der Polymerisation, wodurch das gewünschte homogene Poly(alkyen)guanidin direkt erhalten wird;
wobei die Schritte a) und b) bei einer Temperatur unterhalb der minimalen Polymerisationstemperatur erfolgen und alle Verfahrensschritte a) bis c) unter Rühren durchgeführt werden.

4. Verfahren nach einem der Ansprüche 1 bis 3, wobei das Alkylendiamin Tetramethylendiamin ist, die Monomerbildung in Schritt b) bei einer Temperatur im Bereich von 25 °C bis 110 °C, vorzugsweise im Bereich von 45°C bis 80 °C, durchgeführt wird und die minimale Polymerisationstemperatur 120°C beträgt.

5. Verfahren nach einem der Ansprüche 1 bis 3, wobei das Alkylendiamin Hexamethylendiamin ist, die Monomerbildung in Schritt b) bei einer Temperatur im Bereich von 55 °C bis 110 °C, vorzugsweise im Bereich von 60 °C bis 80 °C, durchgeführt wird und die minimale Polymerisationstemperatur 120 °C beträgt.

6. Verfahren nach einem der Ansprüche 1 bis 3, wobei das Alkylendiamin Oktamethylendiamin ist, die Monomerbildung in Schritt b) bei einer Temperatur im Bereich von 55 °C bis 110 °C, vorzugsweise im Bereich von 70 °C bis 90 °C, durchgeführt wird und die minimale Polymerisationstemperatur 120 °C beträgt.

7. Verfahren nach einem der Ansprüche 1 bis 3, wobei das Alkylendiamin Dekamethylendiamin ist, die Monomerbildung in Schritt b) bei einer Temperatur im Bereich von 55 °C bis 100 °C, vorzugsweise im Bereich von 75 °C bis 90 °C, durchgeführt wird und die minimale Polymerisationstemperatur 120 °C beträgt.

8. Verfahren nach einem der Ansprüche 1-7, wobei der Abschluss der Monomerbildung in Schritt b) durch Beendigung der Schaumbildung aufgrund von NH₃-Freisetzung festgestellt und gegebenenfalls für einen vorbestimmten Zeitraum ein Unterdruck im Reaktionsgefäß erzeugt wird, um die Schaumbildung zu fördern.

9. Verfahren nach Anspruch 8, wobei für einen Zeitraum im Bereich von 10 bis 240 min, typischerweise von 15 bis 90 min, ein Druck im Bereich von 2 mbar bis 4000 mbar, vorzugsweise von 10 mbar bis 1000 mbar, in Schritt b) im Reaktionsgefäß vorliegt.

10. Verfahren nach einem der Ansprüche 1-9, wobei in Schritt b) nicht umgesetztes Alkylendiamin vor Schritt c) abdestilliert wird.

11. Verfahren nach einem der Ansprüche 1-9, wobei das Molverhältnis von Alkylendiamin zu Guanidinium-Salz im Bereich von 1,2:1 liegt und vorzugsweise etwa 1:1 beträgt.

12. Poly(alkylen)guanidin, erhältlich mit dem Verfahren nach einem der Ansprüche 1-11, welches einen Gehalt von mindestens 85 Gew.-%, insbesondere mindestens 90 % oder 97 %, eines gewünschten linearen Poly(alkylen)guanidins mit 3-14, vorzugsweise 4-10, Alkylen-Monomereinheiten im Molekül als Hauptprodukt und einen Gehalt an Nebenprodukten, insbesondere verzweigten Isomeren dieses Poly(alkylen)guanidins, von höchstens 15 %, 10 %, 5 % oder 3 % aufweist.

13. Poly(alkylen)guanidin nach Anspruch 12, welches ein Molekulargewichts-Mittel im Bereich von 500 bis 15.000, insbesondere von 500 bis 5.000 Dalton, aufweisen, wobei höchstens 15 %, vorzugsweise höchstens 10 %, und besonders bevorzugt höchstens 3 % der Polymermoleküle ein Molekulargewicht außerhalb des jeweiligen Molekulargewichts-Mittels aufweisen.
